# EUROPEAN PATENT SPECIFICATION

(11) **EP 0 451 406 B1**
(45) Date of publication and mention of the grant of the patent: **24.01.1996**
(21) Application number: 90312014.5
(22) Date of filing: 02.11.1990
(51) Int. Cl.: B60R 11/02

(54) **Electronic device with removable operating unit**
Elektronisches Gerät mit entfernbarer Betriebseinheit
Dispositif électronique avec unité de commande amovible

(30) Priority: 09.03.1990 JP 56602/90
(43) Date of publication of application: 16.10.1991
(73) Proprietor: PIONEER ELECTRONIC CORPORATION, Meguro-ku Tokyo 153 (JP)
(72) Inventor: Aoyanagi, Yoshiro, Pioneer Electronic Corporation, Oaza Yamada, Kawagoe-shi, Saitama (JP); Sato, Mayumi, Pioneer Electronic Corporation, Oaza Yamada, Kawagoe-shi, Saitama (JP)
(74) Representative: Brunner, Michael John

(56) References cited:
- EP-A- 0 249 071
- EP-A- 0 253 947
- EP-A- 0 365 109
- DE-A- 4 008 536
- DE-U- 8 707 406
- Markus, John: "Modern Electronic Circuits Reference Manual"; McGraw-Hill Book Company, New York (US); 1980; page 1094 (2-5 min STARTING DELAY circuit design and abstract)
- Rembold, Ullrich et.al.: Scriptum to lecture "Koppeln von Rechnern mit technischen Prozessen", University of Karlsruhe (DE), January 1979, pages 239 to 242; figs. 5-43 to 5-48

## Description

This invention relates to an electronic device having an operating section which has a plurality of input keys and which is detachably connected to a body of the electronic device in such a manner that its contacts are electrically connected to the contacts of the body when the operating section is connected to the body.

An operating section of the electronic device, such as a disk player for use in a vehicle, has a plurality of input keys and is detachably connected to a body of the device in such a manner that the operating section's contacts are electrically connected to the contacts of the body when the operation section is connected to the body. The operating section can be operated as desired by operating the input keys of the operating section connected to the body.

The conventional electronic device is designed as described above. Therefore, when the operating section is connected to the body, its contacts are electrically connected to the contacts of the body, so that the outputs provided by operating the input keys of the operating section are received by the body.

Hence, if an input key or keys are operated accidentally while the operating section is being connected to the body, then the electronic device may be operated unintentionally.

According to the preamble of claim 1, EP-A-0253947 discloses an electronic device with removable operating section that is operable only when connecting switches have been moved into position.

An object of this invention is to eliminate the above-described difficulty accompanying a conventional electronic device such as a disk player in a vehicle. More specifically, an object of the invention is to provide an electronic device in which, if the input keys of the operating section are operated accidentally or unintentionally while the operating section is being connected to the body, the electronic device is not allowed to operate.

According to the present invention, there is provided an electronic device having an operating section which has a plurality of input keys and which is detachably connected to a body of the electronic device in such a manner that contacts of the operating section are electrically connected to contacts of the body when the operating section is connected to the body, the body comprising:
connection detecting means for detecting the connection of the operating section to the body and providing a connection detection signal when such connection has been detected; and characterised by
control means for making the connection of the contacts of the body and of the operating section effective a predetermined period of time after the connection detection means provides the connection detection signal to the control means, whereby inputs from the operating section are not made receivable prior to the end of the predetermined time period.

In the electronic device according to the invention, the control means makes the electrical connection of the contacts of the body and the contacts of the operating section effective a predetermined period of time after the production of the connection detection signal indicating the connection of the operating section to the body.

Hence, even if an input key or keys are operated during connection of the operating section to the body, the input from the operating section is not received during the predetermined period of time starting from the time instant the contacts of the operating section are engaged with those of the body. Therefore, even if an input key or keys are operated accidentally or carelessly when the operating section is being connected, the body is not operated.

Fig. 1 is a block diagram outlining the arrangement of one embodiment of an electronic device, according to this invention.

Fig. 2 is a perspective view showing the external appearances of a body and an operating section of the electronic device of the present invention.

Fig. 3 is a flow chart showing a description of the operation of a control section in the electronic device.

One preferred embodiment of this invention will be described with reference to the accompanying drawings.

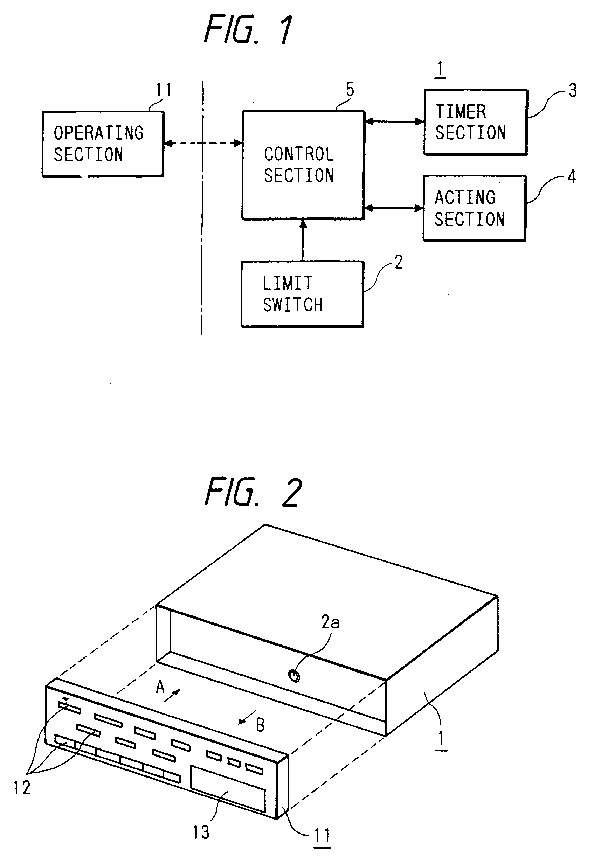

Fig. 1 is a block diagram outlining the arrangement of an electronic device, i.e., the embodiment of the invention. In Fig. 1, reference numeral 1 designates a body of the device; and 11, an operating section of the device which is detachably connected to the body 1.

The body 1 comprises: a connection detecting section, namely, a limit switch 2 which detects the connection of the operating section 11 to the body 1 to output a connection detection signal, and which also detects the disconnection of the operating section 11 to output a disconnection detection signal; a timer section 3 for measuring time; an acting section 4 for actually carrying out a requested operation, i.e., playing a disk; and a control section 5 for controlling the timer section 3, the acting section 4 and the operating section 11 according to the outputs of the limit switch 2.

The term "acting section 4" as used herein is intended to mean, for example, the loading section, the playback section, etc. of a disk player, or a like electronic device, installed in a vehicle.

Fig. 2 is a perspective view showing the external appearances of the body 1 and the operating section 11. The operating section 11 has a plurality of input keys 12 for inputting various data, and a display section 13 for displaying operation modes, for instance.

In Figs. 1 and 2, the contacts of the body 1 and the contacts of the operating section 11 are not shown; however, it should be noted that the body 1 has its contacts on its front end, and the operating section 11 has its contacts on its rear end, in such a manner that those contacts are electrically connected when operating section 11 is connected to the body 1.

In Fig. 2, reference character 2a designates the push button of the limit switch 2.

The connection and disconnection of the operating section 11 will now be described.

When the operating section 11 is engaged with the body 1 by moving it in the direction of the arrow A in Fig. 2, the rear end of the operating section 11 pushes the push button 2a of the limit switch 2, so that the latter outputs the connection detection signal, and the contacts of the operating section 11 are electrically connected to the contacts of the body 1.

When, under this condition, the operating section 11 is disengaged from the body 1 by moving the operating section in the direction of the arrow B in Fig. 2, the rear end of the operating section 11 releases the push button 2a of the limit switch 2, so that the latter 2 outputs the disconnection detection signal, and the contacts of the operating section 11 are electrically disconnected from the contacts of the body 1.

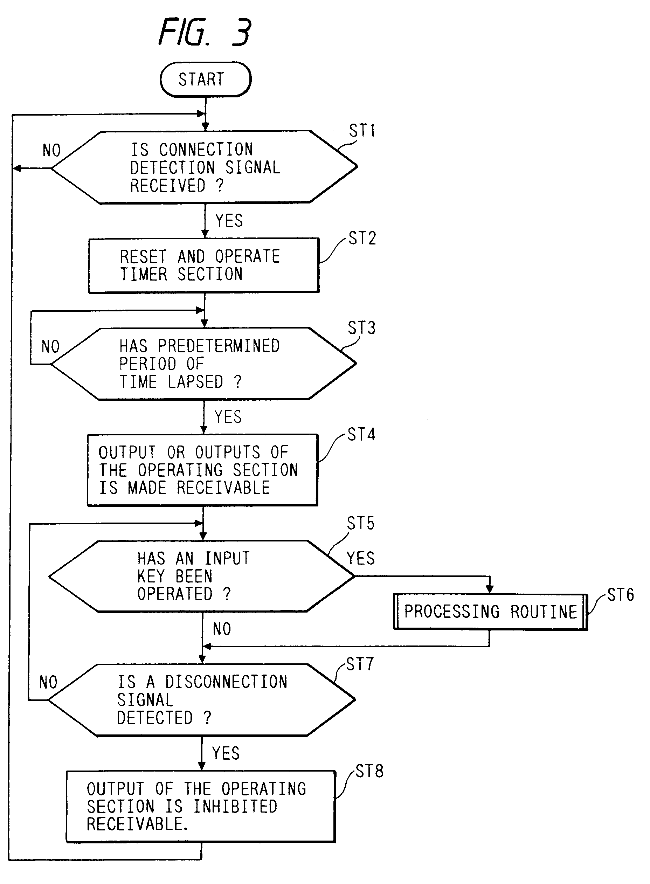

Now, the operation of the control section 5 will be described in conjunction with the flowchart of Figure 3.

When the operating section 11 is connected to the body 1 in the above-described manner, the control section 5 operates as follows. Upon reception of the connection detection signal from the limit switch 2 (Step St1), the control section 5 resets and starts the timer section 3 (Step St2), and waits for a predetermined period of time, for instance five (5) seconds, according to the output of the timer section 3 (Step St3). After the predetermined period has lapsed, the control section operates to make the electrical connection of the contacts effective so that the output or outputs of the operating section 11 are received, such output or outputs being provided by operating the input key or keys 12 (Step St4).

The control section 5 determines from an output of the operating section whether or not an input key 12 has been operated (Step St5). When it is determined that an input key has been operated, a processing routine is effected in which the acting section 4 is controlled in correspondence with the particular input key 12 operated (Step St6).

After Step St6, or if it is determined in Step St5 that no input key has been operated, it is determined from the output signal of the limit switch 2 whether or not the operating section 11 has been disconnected from the body (Step St7). That is, it is detected whether or not the limit switch 2 has produced a disconnection detection signal. When it is determined that the operating section has not been disconnected, Step St5 is effected again. When it is determined that the operating section has been disconnected, Step St1 is effected again, after the reception of inputs through the contacts is inhibited (Step St8).

As was described above, in the embodiment, the connection of the contacts is not made effective; that is, the output or outputs of the operating section provided by operating the input key or keys 12 are not received for a predetermined period of time starting from the time instant the operating section 11 is connected to the body 1. Hence, when the input key or keys 12 of the operating section 11 are operated accidentally or carelessly during the connection of the operating section to the body, the acting section 4 of the body is not operated for the predetermined period of time.

The technical concept of the invention is most effectively applicable to an electronic device for use in a vehicle, because there is a tendency with respect to such an electronic device to have its body miniaturized and, accordingly, the operating section is also miniaturized as much as possible, and therefore the input key or keys 12 are unavoidably operated during connection of the operating section 11 to the body 1.

In the above-described embodiment, the limit switch 2 is employed to detect the connection or disconnection of the operating section; however, it may be replaced by a photosensor, for instance, which can similarly detect the connection or disconnection of the operating section.

Furthermore, in the above-described embodiment, the acting section 4 is controlled by the control section 5. However, the same effect can be obtained by connecting between the contacts of the control section 5 and the remainder of the body 1 a switching element which functions in the same way, i.e., turning on according to the output of the timer section 3 which is provided, for example, in five (5) seconds. It goes without saying that, in this case, immediately when the connection detecting means applies the disconnection detection signal to the control section 5, the switching element is turned off.

While the invention has been described with reference to a vehicle's electronic device, the technical concept of the invention can be applied to other electronic devices.

As was described above, in the invention, the connection between the contacts of the body and the contacts of the operating section is made effective a predetermined period of time after the production of the connection detection signal which is provided when the operating section is connected to the body. Therefore, when the input key or keys are operated accidentally or carelessly during connection of the operating section to the body, the body will not be operated for the predetermined period of time.

## Claims

1. An electronic device having an operating section (11) which has a plurality of input keys (12) and which is detachably connected to a body (1) of the electronic device in such a manner that contacts of the operating section are electrically connected to contacts of the body when the operating section is connected to the body, the body (1) comprising:
connection detecting means (2) for detecting the connection of the operating section to the body and providing a connection detection signal when such connection has been detected; and characterised by
control means (3,5) for making the connection of the contacts of the body (1) and of the operating section (11) effective a predetermined period of time after the connection detection means provides the connection detection signal to the control means, whereby inputs from the operating section (11) are not made receivable prior to the end of the predetermined time period.

2. A device according to claim 1, further characterised in that the connection detecting means (2) involves a push button (2a).

3. A device according to claim 1, further characterised in that the connection detecting means (2) involves a photosensor.

4. A device according to any of claims 1 to 3, wherein the control means further comprises:
timer means (3) for producing a timer output signal a predetermined period of time after the connection detecting means detects the physical connection; and,
control section means (5) for allowing the body section means (1) to receive and carry out the commands input from the keys (12) upon production of the timer output signal.

## Patentansprüche

1. Elektronische Vorrichtung, die einen Bedienungsabschnitt (11) besitzt, der eine Vielzahl von Eingabetasten (12) besitzt und der abnehmbar mit einem Gehäuse (1) einer elektronischen Vorrichtung derart verbunden ist, daß Kontakte des Bedienungsabschnitts elektrisch mit Kontakten des Gehäuses verbunden werden, wenn der Bedienungsabschnitt mit dem Gehäuse verbunden wird, wobei das Gehäuse (1) aufweist:
eine Verbindungsermittlungseinrichtung (2) zum Ermitteln der Verbindung des Bedienungsabschnitts mit dem Gehäuse zum Liefern eines Verbindungsermittlungssignals, wenn eine solche Verbindung ermittelt worden ist; und gekennzeichnet ist durch
eine Steuereinrichtung (3, 5) zum Wirksammachen der Verbindung der Kontakte des Gehäuses (1) und des Bedienungsabschnitts (11) eine vorbestimmte Zeitperiode, nachdem die Verbindungsermittlungseinrichtung das Verbindungsermittlungssignal zu der Steuereinrichtung liefert, wodurch Eingaben von dem Bedienungsabschnitt (11) nicht vor dem Ende der vorbestimmten Zeitperiode empfangbar gestaltet werden.

2. Vorrichtung nach Anspruch 1, die weiterhin dadurch gekennzeichnet ist, daß die Verbindungsermittlungseinrichtung (2) eine Drucktaste (2a) einsetzt.

3. Vorrichtung nach Anspruch 1, die weiterhin dadurch gekennzeichnet ist, daß die Verbindungsermittlungseinrichtung (2) einen Photosensor einsetzt.

4. Vorrichtung nach einem der Ansprüche 1 bis 3, wobei die Steuereinrichtung weiterhin aufweist:
eine Zeitgebereinrichtung (3) zum Liefern eines Zeitgeberausgangssignals nach einer vorbestimmten Zeitperiode, nachdem die Verbindungsermittlungseinrichtung die physikalische Verbindung ermittelt; und
einen Steuerabschnitt (5) zum Ermöglichen, daß die Gehäuseermittlungseinrichtung (1) die Befehlseingabe von den Tasten (12) unter Erzeugung des Zeitgeberausgangssignals empfängt und ausgibt.

## Revendications

1. Appareil électronique comprenant une section d'exploitation (11) qui possède plusieurs touches de saisie (12) et qui est raccordée de façon amovible à un corps (1) de l'appareil électronique, d'une manière telle que des contacts de la section d'exploitation sont connectés électriquement à des contacts du corps lorsque la section d'exploitation est connectée au corps, le corps (1) comprenant :
un dispositif (2) de détection de la déconnexion de la section d'exploitation au corps, destiné à donner un signal de détection de connexion lorsque cette connexion a été détectée, et caractérisé par :
un dispositif de commande (3, 5) destiné à rendre efficace la connexion des contacts du corps (1) et de la section d'exploitation (11) une période prédéterminée après que le dispositif de détection de connexion a transmis le signal de détection de connexion au dispositif de commande, si bien que les signaux saisis à l'aide de la section d'exploitation (11) ne peuvent pas être reçus avant la fin de la période prédéterminée.

2. Appareil selon la revendication 1, caractérisé en outre en ce que le dispositif (2) de détection de connexion comporte un bouton-poussoir (2a).

3. Appareil selon la revendication 1, caractérisé en ce que le dispositif (2) de détection de connexion comporte un photocapteur.

4. Appareil selon l'une quelconque des revendications 1 à 3, dans lequel le dispositif de commande comporte en outre :
un dispositif (3) à minuterie destiné à créer un signal de sortie de minuterie une période prédéterminée après que le dispositif de détection de connexion a détecté la connexion physique, et
un dispositif (5) à section de commande destiné à permettre au dispositif (1) à section du corps de recevoir et de transmettre les commandes saisies à partir des touches (12) après la production du signal de sortie de la minuterie.
